# EUROPEAN PATENT SPECIFICATION

(11) **EP 2 389 233 B1**
(45) Date of publication and mention of the grant of the patent: **30.03.2016**
(21) Application number: 09818671.1
(22) Date of filing: 15.12.2009
(51) Int. Cl.: A63H 33/10, F16B 35/04, F16B 5/02, F16B 37/14, F16B 19/02, F16B 35/02, F16B 35/06

(54) **HOLDERS AND ELEMENTS FOR BUILDING BRICKS, BUILDING BRICKS AND KITS OF SUCH ELEMENTS**
HALTER UND ELEMENTE FÜR BAUKLÖTZE, BAUKLÖTZE UND SÄTZE DERARTIGER ELEMENTE
SUPPORTS ET ÉLÉMENTS POUR BRIQUES DE CONSTRUCTION, BRIQUES DE CONSTRUCTION ET ENSEMBLES DE CES ÉLÉMENTS

(30) Priority: 23.01.2009 BE 200900041
(43) Date of publication of application: 30.11.2011
(73) Proprietor: Rolf, Theodorus Suibertus Antonius, 2000 Antwerpen (BE)
(72) Inventor: Rolf, Theodorus Suibertus Antonius, 2000 Antwerpen (BE)
(74) Representative: Philippaerts, Yannick
(86) International application number: PCT/BE2009/000061
(87) International publication number: WO 2010/083575

(56) References cited:
- WO-A-2006/093540
- BE-A- 374 803
- GB-A- 654 747
- US-A- 3 192 738
- US-A- 3 681 870
- US-A- 4 536 044
- US-A- 5 771 650

## Description

The present invention relates to the field of construction elements such as building bricks, as for instance are found in toy articles of the building block type or construction type.

### Background

Nowadays there are different types of toy building bricks and construction systems.

There are also different terms representing an elementary construction element, such as for instance the terms "(building or construction) brick", "(building or construction) block" and "(building or construction) element".

Many existing building bricks are based on the combining of building elements or bricks by means of a combination of a female and a male coupling structure, which are each usually arranged permanently on one of the surfaces of a corresponding building element and which can be clamped in respectively a complementary male or female coupling structure of a subsequent building element, for instance the classic LEGO™ building brick.

The male coupling structures protrude from the building brick, which enables a good coupling/fixing to other building elements, but which simultaneously limits the number of degrees of freedom in the combination of building bricks.

There is often also a fixed orientation direction for the constructions built with such building elements; the male and female elements are situated on opposite surfaces of a building element so that a construction always ends at the top in male coupling structures, and at the bottom in female coupling structures, wherein top and bottom are in opposite directions.

These coupling structures can also be damaged, which results at the very least in a reduction in the functionality of the block and/or coupling structure; the strength of the coupling can decrease or be completely lost.

This also means that the use of determined materials is impossible or would result in inferior quality. In commercial kits of such building bricks elements are often also added which allow some measure of deviation from the "main direction", although these are usually present in relatively rather small numbers so that the intrinsic "deviation" options for commercially available construction kits is rather limited.

The company Kiditec (www.kiditec.com) produces construction kits which comprise blocks provided with holes through which connecting elements can be arranged, which are adapted to be screwed directly into similar connecting elements and which can thus couple blocks to each other. These connecting elements of the "bolt" type are provided with a small piece of screw thread on the outer end, away from the head, which does not run over the full length of the "bolt", and lie releasably in the opening. The connecting element must co-act at this outer end with a nut-like element to enable coupling/attachment to the block through which the connecting element runs; this nut is integrated with the head of a subsequent bolt, which has a hole with screw thread. When the bolt is arranged in the block the head of the bolt drops into a separate stud which is integrated with the building brick and protrudes above a main surface of the building brick. When the head is arranged in the stud it also protrudes above this main surface. The different studs are also situated on the same side of the building brick so that there is a preferred direction in the construction kit.

Many building systems are further also relatively complex, certainly for a child.

US-A-3681870 describes a construction toy made up of a plurality of geometric forms or blocks, each form or block having an integrally formed outer circumscribing wall to define a hollow structure. One or more hollow struts extend inwardly of each block or hollow structure between opposed wall portions of the circumscribing integral outer wall to reinforce the hollow structure. The hollow struts are also integrally formed to the outer wall with the opposed ends of the respective struts defining an opening in the adjacent outer wall portions of the hollow structure. A coupler complementing the openings is provided for detachably securing two or more blocks together in a side by side relationship.

BE-A-374803 describes a metallic piece that is hollow at its edges and internally chamfered or beveled, optionally supporting an internal thread. However, this document does not relate to construction sets of the building block type.

There is a current need for alternative building brick or construction systems which provide a solution to the limitations of the prior art and which are of simple design.

### Summary of the invention

When terms such as "first", "second", "third" and so on are used, this does not necessarily mean that a successive or a chronological sequence must be assumed.

The term "comprising" must be interpreted such that it does not preclude any other elements or steps.

In the context of this description the terms "(building) brick" or "(building) block" are used to refer thereto. Unless otherwise stated or implicitly apparent to the skilled person, this "building brick" does not have to have a specific shape. Different shapes can be used without departing from the present invention.

It is an object of the present invention to provide an alternative which solves at least one or several of the above stated prior art problems and is of simple design.

The invention thus provides a construction set of the building block type in accordance with claim 1.

A construction set of the building type is described, comprising at least one building brick which comprises at least one opening, and at least one holder which is adapted to be arranged in the opening of the building brick, wherein at least a first outer end of the holder comprises a first coupling means which is adapted for coupling to an element which forms a protrusion of the stud type for the building brick.

This opening can be a blind hole (hole with bottom), but can also be a transverse hole (a continuous hole).

The holder is adapted for fixing in the opening. This fixation can take place in different ways, such as for instance:
- a fixation by means of clamping the holder in the opening in the case of holders adapted for use in hammering applications (holder which is elastically deformable in radial direction due to for instance a lateral incision or by means of flaps which are arranged on, and virtually widen, the side surface of the holder, wherein the flaps are elastically deformable and provide for a fixation relative to the internal wall of the opening, or a fixation by means of a pin with a serrated side surface, the serrations of which can co-act with protrusions (semi-balls or droplets) on the inner side of the opening).
- a fixation by means of one or more nuts which are complementary to the recesses of the openings and which can be connected by means of a connection of the screw thread type to the holder, which would comprise a complementary structure of the screw thread type on a suitable part of its (in this case) cylindrical outer surface, the nuts here also being countersunk in the recesses around the openings of the building bricks.

This fixation can prevent the sliding of the holder in the axial direction or prevent the rotation of the holder in the opening. This fixation can prevent both forms of movement, i.e. axial displacement and rotation of the holder in the opening.

In a preferred embodiment of the present invention the opening is substantially cylindrical. This opening can also have other shapes. This opening preferably has a constant radial cross-section. This cross-section can be circular in the case of a cylindrical opening, although it can also be elliptical, ovoid, square, triangular or have another suitable shape, as will be appreciated by the skilled person.

In preferred embodiments of the present invention the opening widens close to and in the direction of the outer surface of the building brick so as to thus form a for instance annular recess in the building brick around the opening. In the case of a cylindrical opening the diameter of the holder, when it is arranged in a corresponding opening in a building brick, can vary continuously or discretely close to and in the direction of the outer surface of the building brick. A chamfered or a square recess can thus be provided around the open outer end of the opening. This recess can be defined by a surface which is flat or concave. In other words, this surface can have a curve directed toward the interior of the building brick.

The first coupling means of the holder comprises a holder hole. This holder hole is provided on the inside with a structure of the screw thread type. This coupling means is adapted for coupling to an element comprising a first coupling means comprising a structure of the screw thread type adapted to co-act with the screw thread of the first coupling means of the holder.

In preferred embodiments the holder is elongate and comprises a second coupling means on its second outer end, which comprises a holder hole. This holder hole can likewise be provided on the inside with a structure of the screw thread type. This structure can be a screw thread, but can also be a structure which provides similar functionalities, as will be appreciated by the skilled person.

In preferred embodiments the holder comprises a single holder hole which comprises a structure of the screw thread type and which comprises the first holder hole and the second holder hole. In other words, the first and the second holder holes can form a continuous hole.

The holder holes can be substantially cylindrical. In preferred embodiments of the present invention the length of the holder can be substantially the same as the length of the transverse hole. As a result, the length of the holder can correspond to a dimension of the building brick, such as for instance the thickness of the building brick. The length of the holder hole can as a result correspond to a dimension of the building brick, such as for instance the thickness of the building brick.

In preferred embodiments the dimensions of the building brick and the holder are further chosen such that, when the holder is arranged in the transverse hole and the holder does not protrude from the building brick, the first and the second outer ends of the holder debouch at the position of respectively a first and second surface of the building brick.

This first and/or second surface of the building brick are preferably main surfaces of the building brick. The outer ends of the holder can be situated at the position of these main surfaces. The upper surface of the holder can preferably be parallel to the first or the second surface. Both end surfaces of the holder can be parallel to the first and second surface.

In other embodiments of the present invention the length of the holder can be smaller than the length of the transverse hole and can correspond to the length of the non-widened part of the opening.

In preferred embodiments of the present invention at least one holder hole widens close to and in the direction of its open outer end so as to thus form an annular recess in the holder around the holder hole. All holder holes of the holder preferably comprise such widening. In the embodiment of a single continuous holder hole, this holder hole preferably comprises such widening at each of its outer ends.

In other embodiments, in which the opening widens close to and in the direction of the outer surface of the building brick so as to thus form an annular recess in the building brick around the opening, the holder widens close to and in the direction of one of its outer ends, herein forming an annular protrusion for the holder which is complementary to the recess in the building brick around the opening. Because the form of the annular protrusion of the holder is complementary to the annular recess in the building brick, the upper surface of the holder, after being inserted in the opening, can extend to the same level as the corresponding surface of the building brick, for instance a main surface of the building brick. The protrusion will consequently not protrude above the surface of the building brick. The protrusion can as it were form a head which is countersunk in the building brick when the holder is arranged therein. The protrusion further also provides for a fixation relative to the building brick because it limits arranging of the holder in the opening so that the holder cannot move through the building brick or so that the holder is fixed at the correct level, corresponding to a level where the top side of the holder corresponds with the surface of the building brick, preferably a main surface of the building brick.

The annular protrusion of the holder can be referred to with the term "head".

It can be noted that a building brick is typically constructed from different surfaces which are mutually connected. The building brick typically comprises several main surfaces, surfaces which are flat and comprise substantially no protrusions or notches, which can further be provided per se with smaller structures arranged in or on these main surfaces, such as for instance studs.

An exemplary holder is described, which is adapted to be arranged in an associated opening in a building brick, the holder being of the elongate type and comprising a first and a second outer end, wherein the holder comprises on at least a first outer end a holder hole which extends along the longitudinal direction of the holder. This holder hole is further provided with a structure of the screw thread type, or a structure which can fulfill the function of screw thread. The holder hole can be situated centrally in the holder and for instance run parallel to the longitudinal axis or axis of symmetry of the holder. The axes of symmetry of the holder and the holder hole can coincide.

The holder can comprise a cylindrical holder hole at both outer ends which extends in the longitudinal direction of the holder. The holder holes can further comprise on both outer ends a structure of the screw thread type, such as for instance screw thread or a structure which can fulfil the function of screw thread.

In preferred embodiments the holder comprises one cylindrical holder hole which extends along the longitudinal direction of the holder and which comprises the cylindrical openings in the first and second outer end. This holder hole can comprise a structure of the screw thread type, such as for instance a screw thread or a structure which can fulfil the function of screw thread.

In preferred embodiments the cylindrical holder holes (or the holder hole) widen close to their open outer ends and here thus form an annular recess around the holder hole.

The annular recess around the holder hole can have a width, measured along the upper surface of the holder (or, after being arranged in the building brick, measured along the relevant surface of the building brick), of for instance more than 0.1 mm, more than 0.2 mm, more than 0.3 mm, more than 0.4 mm, more than 0.5 mm, more than 0.6 mm, more than 0.7 mm, more than 0.8 mm, more than 0.9 mm, more than 1 mm, more than 2 mm. Such a typical width can preferably amount to 1 or 2 mm, although other larger or smaller values are also possible.

The depth of the recess can for instance be 0.1 mm, 0.2 mm, 0.3 mm, 0.4 mm, 0.5 mm, 0.6 mm, 0.7 mm, 0.8 mm, 0.9 mm, 1 mm, 2 mm, although smaller or larger values are also possible.

Note that these dimensions also apply to the blocking means present in elements according to embodiments of the third aspect of the present invention, such as for instance protrusions or protruding elements, such as for instance edges, which in typical embodiments have a form which is complementary to the form of the recess around the holder hole.

In preferred embodiments the holder has a substantially constant radial cross-section, except for close to and in the direction of a first outer end, where the holder widens and thus comprises a protruding edge. This widening is preferably of the annular type and can provide the holder with an oblique or straight head. The widening can comprise the presence of one or more protrusions close to the first outer end. The upper surface of this widening, forming the upper surface of the holder, can further preferably be flat, and lie at right angles to the longitudinal direction of the holder. This upper surface can preferably be provided with a coupling means adapted to co-act with a screwdriver, for instance a screwdriver of the flat head type or the crosshead type. This coupling means can for instance comprise a slot in the upper surface of the holder head, the depth of which increases toward the centre of the slot. The increase in depth can take place symmetrically on both sides relative to the centre of the slot. The gradual increase in the depth of the slot can result in a sloping slot bottom, such as for instance a slot bottom substantially forming a circular arc. The use of such a slot bottom, and a screwdriver adapted thereto, provides a relatively greater contact surface between the head of the screwdriver and the slot, which can improve the grip in the slot and can allow a relatively greater force to be exerted. It should be noted that the varying depth of the slot must be adapted such that it nowhere extends through the head of the holder.

The slot can further also be bounded laterally, for instance perpendicularly of the longitudinal direction of the slot, or in the longitudinal direction of the slot, by likewise curved boundary surfaces (which for instance also substantially describe a circular arc). The slot can comprise rounded corners.

In an aspect of the invention a screwdriver of the flat head type is also described, which is adapted to co-act with (at least a part of) a slot as described above, the upper surface of the head of which is sloping, describing for instance a circular arc which corresponds with the slope or circular arc at the bottom of the slot. The junctions of the side surfaces defining the flat head can also be rounded, this in contrast to prior art screwdrivers which have angular junctions. This can make the screwdriver safer, for instance for children. It can be noted that this aspect of the present invention is also more widely applicable and can in fact be applied for random screw means with head, such as bolts, screws and so on.

In preferred embodiments the height of the edge or widening of the holder is preferably less than 30 percent, less than 25 percent, less than 20 percent, less than 15 percent, less than 10 percent, less than 5 percent of the length of the holder.

In preferred embodiments, in which the holder comprises an edge, the part of the holder of substantially constant cross-section is substantially cylindrical.

In other embodiments the holder comprises no protruding edge and the holder has a substantially constant radial cross-section. In such preferred embodiments the holder can be substantially cylindrical.

In preferred embodiments the holder is further elastically deformable in the radial direction. This elastic deformation is preferably possible with forces in the order of the forces which a child can exert. These embodiments have the advantage that a holder (or connecting element) can be arranged in a complementary hole by deforming elastically, and that this connecting element is then fixed in the hole or opening owing to the elastic deformation. The holder can be manufactured for this purpose from a suitable plastic material such as a soft foam or a hard plastic, wherein however the non-deformability of the main part in the axial direction is preferably maintained. This can for instance take place by providing a soft synthetic material, or rather a hard foam, with an internal strengthening element such as a metal or hard plastic pin which is connected to the foam or semi-soft plastic and which is optionally also anchored in this material.

In preferred embodiments the holder comprises an elongate opening, groove or channel through the side wall of the holder, preferably substantially parallel to the longitudinal axis of the holder and preferably running over the full length of the holder. This elongate opening or incision is preferably linear and preferably runs through the wall and debouches in the holder hole.

In preferred embodiments the holder is substantially not elastically deformable in the axial direction as stated above, in other words, the holder (or the connecting element) is preferably not elastically deformable in the axial direction when it undergoes forces corresponding to the blow of a hammer delivered by a child hammering in a typical construction toy activity. This feature is particularly advantageous when hammering applications (applications in which the holder is driven into a corresponding opening with one or more blows on one outer end of the (first or second) element). This process can be deemed as being of substantially discontinuous nature since an (elastically or non-elastically) deformable connecting element would make this hammering activity difficult or impossible. Instead of being hammered into the complementary opening of a building brick, a holder elastically deformable in axial direction could thus rather bend or be compressed so that the connecting element cannot be arranged in the complementary hole, or not in sufficiently simple manner, while on the other hand a holder which is not elastically deformable but which is deformable can be deformed, change shape and hereby become incompatible with the complementary hole. The connecting element may further not be broken or damaged by forces corresponding to, and in the order of magnitude of, an impact of a small hammer handled by a child.

In preferred embodiments of the present invention the upper and lower surface of the holders are substantially flat. In preferred embodiments of the present invention the upper and lower surfaces of the holders can be serrated or wave-like, this preferably in a complementary manner such that, when two holders are arranged on and against each other with the lower surface of the first holder against the upper surface of a second holder (or vice versa), the two holders are fixed relative to each other in respect of a relative rotation of the holders around their shared axis of symmetry. This aspect can be particularly important in embodiments where no other such fixation between holders is present. Other forms of the lower and upper surfaces of the holders can also be used, which are adapted to fulfil this function. The lower and upper surfaces of the holders can for instance be provided for this purpose with suitable grooves and/or protrusions.

The building bricks according to embodiments of the present invention can comprise or consist of wood or a suitable synthetic material, polyethylene, plastic, a hard or soft foam material, hardboard, compressed fibre materials and so on, although, as can be appreciated by the skilled person, other materials are possible. The building blocks can be cast or blown, or manufactured via other techniques known to the skilled person, in accordance with the application.

In preferred embodiments the building blocks comprise wood or consist of wood.

In preferred embodiments of the present invention a combination of wood/plastic, wood/synthetic material or (synthetic material or plastic)/(synthetic material or plastic) can be used for the building brick and the holder respectively. In a set of building bricks different building blocks can consist of different materials, which can preferably be adapted to co-act with holders all having the same composition or relevant features.

The building blocks according to embodiments of the present invention can be manufactured in different dimensions without losing their essential characteristics. A building block can thus have a length of for instance about 5, 6, 7, 8, 9, 10 cm, a width of for instance about 6, 7, 8, 9, 10 cm and a height corresponding to the dimensions of the associated holders of for instance 8 mm, 9 mm, 10 mm, 11 mm, 12 mm, although smaller or larger sizes are also possible for the different dimensions. The holes present in the building blocks can also have the same, but also different dimensions (for instance the same or different cross-sections or diameters) which, when they are supplied in a set together with the associated holders (or connecting element), correspond to the dimensions of this holder.

In preferred embodiments the dimensions of the building bricks and holders present in a kit of building bricks are chosen in well-considered manner. The dimensions of the building bricks (which can for instance also take the form of "construction plates" or "construction panels", as well as other forms), can thus always correspond to or be whole multiples of a basic dimension. This provides the advantage that cube structures can be formed easily and in many ways. The connecting elements or holders can therefore have a length corresponding to this basic dimension or a multiple thereof. In an embodiment of the present invention beam-like building bricks can for instance be provided which have a length which is twice the width and/or a height corresponding to a third of the length. The holders or connecting elements can for instance be three basic units long and can then for instance join together three (or two or four or another whole number) building bricks (for instance construction panels) which each have a thickness (or height) amounting to one basic unit. Each of these three construction panels can moreover fulfil a function of its own and/or for instance consist of a different material or have a different colour. Building bricks can also have heights (or thicknesses) which amount for instance to a whole multiple of the basic unit, while the holders or connecting elements are only a single basic unit long (or high).

An exemplary element is described, which is adapted to co-act with a holder according to any of the embodiments of the present invention, comprising a first and a second outer end, the first and second outer end comprising respectively a first and second coupling means, which is adapted in each case to engage in the holder holes of the holder, wherein the element comprises a blocking means adapted to limit the insertion of the element by means of the first or the second coupling means into the holder hole to a determined depth.

The first coupling means comprises a structure of the screw thread type adapted to co-act with a structure of the screw thread type in a holder hole.

In preferred embodiments the second coupling means comprises a structure of the screw thread type adapted to co-act with a structure of the screw thread type in a holder hole.

In preferred embodiments the element comprises on its first and/or second outer end a coupling means which is not of the screw type. This coupling means can for instance be a snap connection or a slide-in connection of the LEGO™ type, but may also comprise other coupling means.

In preferred embodiments the element takes substantially the form of a piece of (threaded) rod comprising substantially flat outer ends, which are connected to each other by means of a longitudinal, substantially cylindrical jacket which can preferably comprise screw thread.

The blocking means can comprise at least one protrusion.

The blocking means can comprise an annular edge around the cylindrical jacket, this edge lying in a plane perpendicularly of the longitudinal direction of the element. The blocking means can be situated substantially in the centre of the jacket.

In embodiments of the present invention the element comprises a coupling means of the screw thread type on its first outer end and a coupling means not of the screw thread type on its second outer end.

In preferred embodiments the element can comprise or consist of wood or a suitable synthetic material, polyethylene, plastic, a hard or soft foam material, hardboard, compressed fibre materials and so on, although, as can be appreciated by the skilled person, other materials are possible.

According to embodiments the element is adapted to be inserted (for instance screwed) into the at least one cylindrical opening of the holder, and the dimensions of the blocking means are chosen such that the blocking means would fit into a space formed by the two annular recesses of identical holders which would be placed mutually in line, aligned and with their heads against each other. This means that, if two holders with protruding edge were for instance aligned mutually in line and placed against each other along the outer end where the respective heads are situated, a space would be formed by the annular recesses present close to the outer end of the holder holes, and that the blocking means can fit into this space.

An exemplary building brick is described, comprising at least one opening which is substantially cylindrical and of constant radial cross-section, but which widens close to and in the direction of the open outer end or the open outer ends of the opening so as to thus provide an annular recess in the building brick around the open end (the open ends) of the opening.

The recess (or groove) can have a width, measured along the surface of the building brick, of for instance more than 1 mm, more than 2 mm, more than 3 mm. Such a typical width can preferably amount to 4 or 5 mm, although other greater or smaller values are also possible.

The depth of the recess (or groove) can for instance be 1 mm, 2 mm, 3 mm, 4 mm, 5 mm, although smaller or greater values are also possible, as long as the (maximum) depth amounts to no more than half the thickness of the building block.

Note that these dimensions also apply for the widening of the holders close to a first outer end, which in typical embodiments takes a form which is complementary to the form of the recess (or groove) in the building brick.

According to embodiments of the present invention, the substantially cylindrical main part or the holder comprises a widening at one of the two outer ends. The widening can take the form of a nut-like structure.

In a further example a building brick is shown which comprises at least one coupling structure which is adapted and arranged to be coupled to another building brick or coupling structure, wherein the coupling structure is situated at the outer end of a connecting element, the connecting element or the holder being arranged and secured removably in a hole in the building brick.

An exemplary building brick is described, which comprises at least one substantially cylindrical hole which runs through the building brick, wherein the radius of the hole widens from a determined depth toward the outer surface of the building brick such that there is a limited annular recess around the outer ends of a connecting element or holder according to an embodiment of the present invention, if this connecting element were adapted to the hole, were arranged wholly in the hole and were to have a length or a main part with a height equal to the length of the hole.

Further aspects of the present invention are described in the dependent claims. The features of the dependent claims, features of any of the dependent claims and any of the features of other dependent claims can be combined and be deemed appropriate by the skilled person, and not only in the specific combinations as defined by the claims.

### Description of illustrative examples and drawings

The above stated and other advantageous features and objects of the invention will become more apparent and the invention will be better understood as a result of the following detailed description when read in combination with the respective drawings.

The accompanying drawings are used to illustrate embodiments of the present invention.

Reference symbols are chosen such that they are the same for similar or the same elements or features in different figures or drawings.

The description of the aspects of the present invention is given by means of specific embodiments and with reference to, but not limited to, specific drawings. The shown figures are only schematic and must be deemed non-limitative. Determined elements or features can for instance be shown out of proportion or scale in relation to other elements.

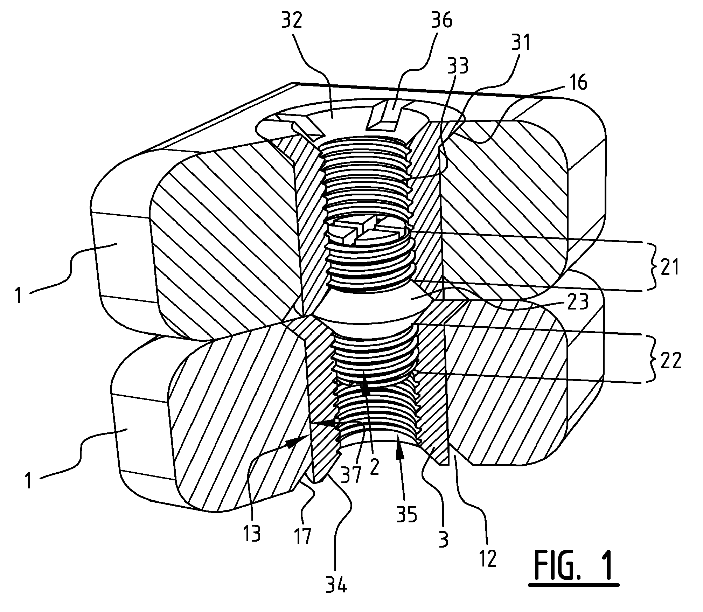

Figure 1 shows embodiments of aspects of the present invention. Two building bricks (1) are mutually connected by means of an element (2) which is coupled to a first holder (at the top) (3) and a second holder (3) (at the bottom). These holders are in turn fixed in openings (11) of the building bricks. Their outer wall or jacket (37) here comes into contact with the inner surface (13) of the opening in the building brick. Holders (3) are here arranged in the openings by for instance a hammering operation. The dimensions of the holder (in particular the diameter and/or the cross-section) have preferably been modified to the dimensions of the corresponding openings in the building bricks. The building bricks are typically constructed from mutually connected side surfaces which define the building brick. Openings (11) in the building brick (at least one, or a plurality of, or all openings) preferably have an annular recess (12) close to the outer surface of the building brick. The holder can preferably also comprise close to one of its two outer ends an annular protrusion (31) which is adapted or complementary to annular recess (12) close to the opening in the building brick. The annular recesses (12) can be defined by surfaces 16 (at the top) and 17 (at the bottom). These surfaces 16 and 17 can be convex relative to the surface of the building brick, this being typically the case for blown building bricks, but are preferably flat or concave. This annular protrusion can also be referred to as the "head" of the holder and is not essential in determined embodiments of the present invention. The holders are arranged here in the openings in the respective building bricks such that the upper surface of the respective heads of the holders does not protrude above the corresponding (for instance main) surfaces of the building bricks. In other words, head (31) of the holder is preferably countersunk in the building brick in that it disappears completely into the annular recess (12) around the open outer end of the hole in the building brick. This head can further be provided with an optional coupling means (36) for a screwdriver, which can be of the standard flat or crosshead type but which can also be adapted according to other embodiments as described above. Holders (3) here comprise central holder holes (35) which run centrally through the respective holders in the longitudinal direction of the holder and which are further provided with screw thread (33). An annular recess (32 in the presence of a "head", 34 in the absence thereof, 32 and 34 being preferably of the same form) is present in each case here close to the open outer end of the holder holes. As shown in figure 1, an element (2) comprising a first coupling means (21) consisting of screw thread and a second coupling means (22) consisting of screw thread, the two coupling means being separated from each other by means of a blocking means (23), can be connected to the outer ends of holders in the building bricks so that these holders can be attached onto each other.

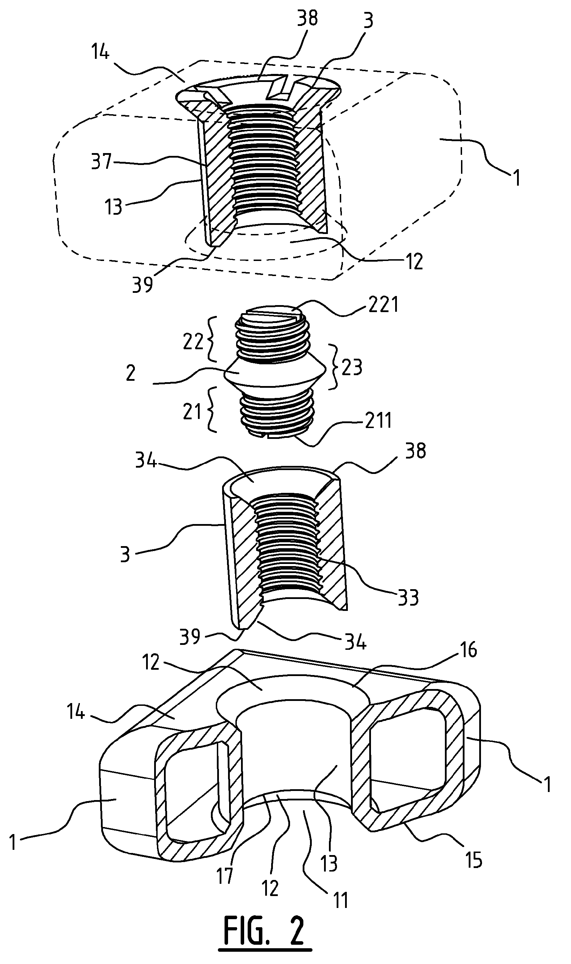

Figure 2 shows another view of embodiments of the present invention corresponding to figure 1. The lower of the two holders does not have a "head" here on one of its outer ends, but is adapted to be arranged in an opening (11) of building brick (1). The lower building brick is here for instance also substantially hollow. This figure shows a possible construction sequence of an assembled construction in which a first building brick (1) comprises an opening (11) (at the bottom), in which a first holder (3) can be arranged (at the bottom). This holder comprises an annular recess (34) around (the outer ends of) the holder hole, the holder hole further being provided with screw thread. An element (2) ("pin") comprising a first (21) and a second (22) coupling means, shown here as a piece of threaded rod comprising a substantially cylindrical tube part provided with a screw thread at both outer ends, and further separated by a blocking means (23) which as it were forms an edge at for instance roughly half the height of the element. The form of blocking means (23) and annular recesses (34) around holder hole (35) are chosen such that they are complementary such that at least a part of blocking means (23) can be received in annular recess (34, 32) of a first holder and a second part of the blocking means can be received in a second annular recess of a second holder, such that, when two successive holders finally come to lie adjacently against each other, they are fixed relative to each other and relative to the element, and that the blocking means is further wholly received in the two annular recesses (32 and 32, or 32 and 34, or 34 and 34) of the respective holders.

The pin can then be screwed with a first screw thread (21) into the complementary screw thread of the first holder. A second block or building brick, in which a second holder is arranged in similar manner (this holder does for instance here have a "head"), can for instance then be tightened onto the second coupling means (22) of the pin. The pin can comprise a substantially flat surface (end surfaces 211 and 221) at its outer ends. These end surfaces can further be provided with a coupling structure, for instance for a screwdriver. This can also be the case for the head of the holder, which can further comprises a structure (36) in which a screwdriver can engage. Note that the building bricks have been shown here as identical solely by way of example, but that different building bricks with different shapes can be used in combination. It is an advantage of embodiments of the present invention that the holder structures are countersunk into the building bricks and consequently do not protrude therefrom. Outer ends (38, 39) of the holders here preferably do not protrude above main surfaces (14, 15) of the building brick. In preferred embodiments outer ends 38, 39 extend to the level of main surfaces (14, 15) of the building brick. Embodiments of the present invention moreover provide the advantage that the elements can in fact form removable studs for a relatively simple block comprising at least one opening. It should also be noted that the edges of the building bricks in the figures have been rounded, which may be useful for aesthetic and safety reasons, but that this is not strictly necessary. The shown blocks are cube or beam-like, but can also have other shapes.

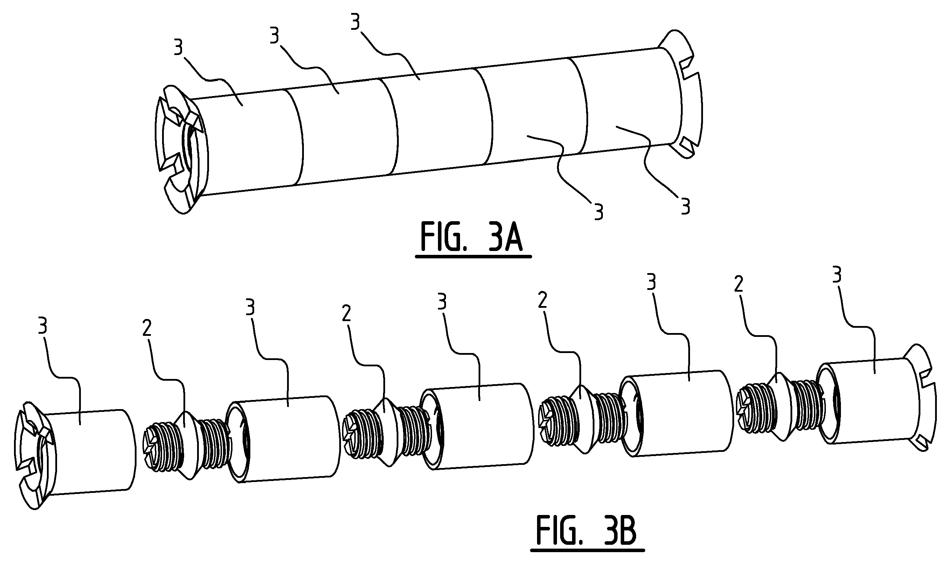

Figure 3a shows a further structure with elements according to the present embodiment. Different holders (3) are here mutually coupled using connecting elements (2). Figure 3a shows a first holder with head is connected to a series of cylindrical holders without head and then to a second holder with head by means of the connecting elements ("pins") according to embodiments of the present invention. In this way a shaft can for instance be formed, which can be used in the building of toy constructions in which this shaft can for instance serve as shaft for the wheels of a cart.

Figure 3b further shows the structure of this construction.

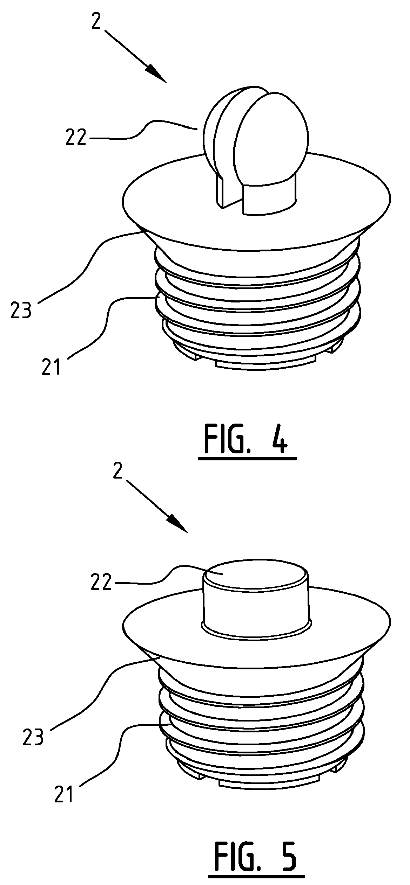

Figure 4 shows a further pin or element wherein the first coupling structure (21) is of the screw thread type and wherein the second coupling structure (22) comprises a coupling structure of the snap connection type. These pins can allow couplings to other construction kits or to other coupling structures modified thereto. Figure 5 shows a similar element wherein the second coupling structure is not a snap connection but a slide-in connection of for instance the LEGO type. The elements of figures 4 and 5 can be used to further provide a building block, which is initially provided only with holes, with holders in the first instance, but also with removable studs in the second instance. It is an advantage of the embodiments of the present invention that these studs can be arranged when they are really needed for executing a specific construction, where certain prior art comprises fixed studs which form functional or aesthetic obstructions.

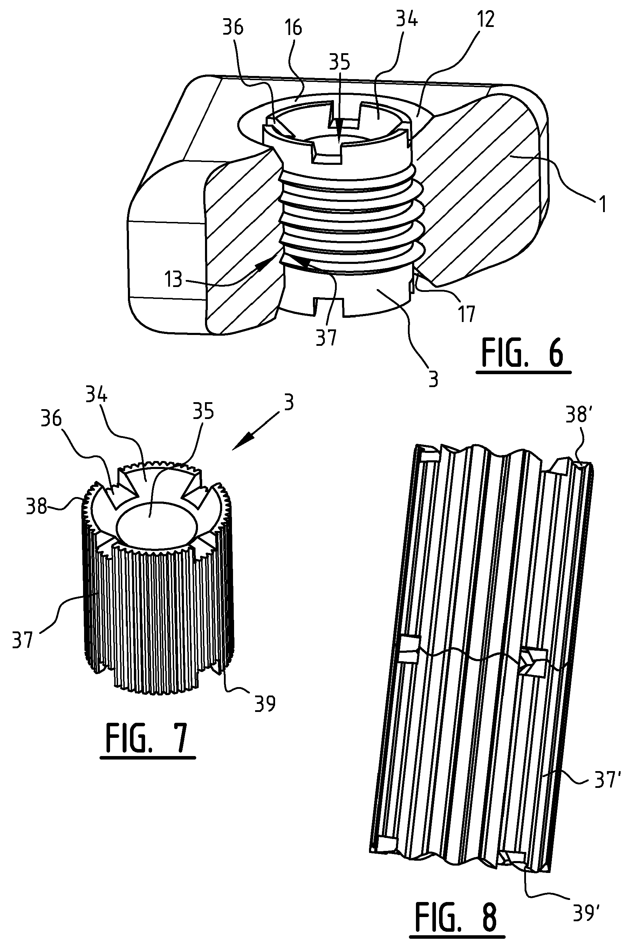

Figure 6 shows a further embodiment of the present invention, wherein the holder is fixed in the opening in the building brick by means of a screw thread connection. The jacket of holder (37) (also the outer surface of the holder) is provided here with screw thread and inner surface (13) of the hole in the building brick is provided here with a complementary structure of the screw thread type, screw thread or similar structure. This holder has no "head" or "edge" close to one of its outer ends, although this is also possible, as can be understood by the skilled person.

Figure 7 shows a further embodiment of the present invention, wherein the coupling of the holder to the opening in the building brick could take place by means of the use of a ridged side wall (37). This side wall can for instance comprise mutually adjacent ridges or be covered with such adjacent ridges running in longitudinal direction of the holder. When urged into the opening in the building brick these ridges can for instance co-act with semi-ball structures or droplet structures or other relief structures, which are arranged on a further substantially smooth inner surface (13) of an opening so as to thus obtain a suitable fixation of the holder in the corresponding building brick. The upper and lower surfaces (38, 39) of the holders are here substantially flat.

Figure 8 describes embodiments similar to the embodiments of figure 7, comprising however a wave-like upper and lower surface (38', 39'). When such holders are stacked, the respective lower and upper surfaces fit into each other so that the relative rotation around the shared axis of symmetry of the holders relative to each other is made impossible. Instead of group structures it is also possible to utilize other blocking structures, such as for instance a serrated structure or a crenellated structure. These upper and lower surfaces of the holders preferably have a complementary structure. They preferably have a structure which is self-complementary. Side wall 37' of the holders comprises here an alternative form of ridge structure, from a substantially flat surface which is provided with a series of parallel channels or grooves preferably placed at regular mutual distances. These channels or grooves preferably run parallel to the longitudinal axis of the holder.

In the description of determined embodiments according to the present invention different features are sometimes grouped in a single embodiment, figure or description thereof, with the object of contributing toward the understanding of one or more of the different inventive steps. This may not be interpreted as if all features of the group are necessarily present in order to solve a specific problem. Inventive aspects are not to be found in all features of such group features present in the description of a specific embodiment.

While some embodiments described herein comprise some but not other features included in other embodiments, combinations or features of different embodiments are intended to lie within the scope of the invention and to form different embodiments, as would be understood by a skilled person.

While the principles of the invention have been described above in respect of specific embodiments, it must be clearly understood that this description is given only by way of example and is not limitative to the scope of protection defined by the appended claims.

## Claims

1. A construction set of the building block type, comprising at least one building brick (1) which comprises at least one opening (11), at least one holder (3) which is adapted to be arranged in the opening of the building brick (1), and at least one element (2) which forms a protrusion of the stud type for the building brick, wherein at least a first outer end (38) of the holder (3) comprises a first holder hole (35) which is adapted for coupling to the element (2), the element (2) comprising a first and a second outer end, the first outer end comprising a coupling means (21) which is adapted to engage in the holder hole (35) of the holder (3), **characterized in that** the holder hole (35) is provided on the inside with a structure of the screw thread type, being screw thread or a structure which can fulfill the function of screw thread, and **in that** the first coupling means (21) of the element (2) comprises a structure of the screw thread type adapted to co-act with a structure of the screw thread type in the first holder hole (35).

2. A construction set as claimed in claim 1, wherein the opening (11) is a transverse hole.

3. A construction set as claimed in claim 1 or 2, wherein the length of the holder (3) is substantially equal to the length of the transverse hole (11) and wherein the dimensions of the building brick (1) and the holder (3) are further chosen such that, when the holder (3) is arranged in the transverse hole (11) and the holder (3) does not protrude from the building brick (1), the first (38) and the second (39) outer ends of the holder (3) debouch at the position of respectively a first (14) and a second (15) surface of the building brick (1).

4. A construction set as claimed in any of the claims 1-3, wherein the holder (3) is further adapted for removable fixing in the opening (11).

5. A construction set as claimed in any of the foregoing claims, wherein the holder (3) is elongate and comprises a second coupling means on its second outer end (39), which comprises a holder hole (35), wherein the holder hole (35) is provided on the inside with a structure of the screw thread type, being screw thread or a structure which can fulfil the function of screw thread.

6. A construction set as claimed in claim 5, wherein the holder (3) comprises a single holder hole (35) comprising the first holder hole and the second holder hole.

7. A construction set as claimed in any of the foregoing claims, wherein at least one holder hole (35) widens close to and in the direction of its open outer (38) end so as to thus form an annular recess (32; 34) in the holder (3) around the holder hole (35).

8. A construction set as claimed in any of the claims 5-7, wherein the two holder holes (35) widen close to and in the direction of their open outer end (38; 39) so as to thus form annular recesses (32, 34) in the holder around the holder holes (35).

9. A construction set as claimed in any of the foregoing claims, wherein the opening (11) widens close to and in the direction of the outer surface (14; 15) of the building brick (1) so as to thus form an annular recess (12) in the building brick (1) around the opening (11).

10. A construction set as claimed in claim 9, wherein the holder (3) widens close to and in the direction of one of its outer ends (38, 39), herein forming an annular protrusion (31) for the holder (3) which is complementary to the recess (12) formed in the building brick (1) around the opening (11).

11. A construction set as claimed in any of the foregoing claims, wherein the holder (3) is elastically deformable in the radial direction.

12. A construction set as claimed in any of the foregoing claims, wherein the holder (3) further comprises an elongate opening through the side wall of the holder, substantially parallel to the longitudinal axis of the holder and running over the full length of the holder.

13. A construction set as claimed in any of the foregoing claims, wherein the second outer end (221) of the element (2) comprises a second coupling means (22) which is adapted to engage in a holder hole and wherein the second coupling means (22) of the element (2) comprises a structure of the screw thread type adapted to co-act with a structure of the screw thread type in a holder hole.

14. A construction set as claimed in any of the foregoing claims, wherein the element (2) comprises a blocking means (23) adapted to limit the insertion of the element (2) by means of the first (21) or the second (22) coupling means into the holder hole (35) to a determined depth.

15. A construction set according to the preceding claims, wherein the dimensions of the blocking means (23) are chosen such that the blocking means (23) would fit into a space formed by the two annular recesses (32) of identical holders (3) which would be placed mutually in line, aligned and with their heads against each other.

## Patentansprüche

1. Bausatz vom Bausteintyp, umfassend
zumindest einen Baustein (1), der zumindest eine Öffnung (11), zumindest einen Halter (3), der geeignet ist, in der Öffnung des Bausteins (1) angeordnet zu sein, und zumindest ein Element (2) aufweist, welches einen Vorsprung vom Bolzentyp für den Baustein bildet,
wobei zumindest ein erstes äußeres Ende (38) des Halters (3) ein erstes Halterloch (35) umfasst,
welches geeignet ist zur Kopplung mit dem Element (2),
wobei das Element (2) ein erstes und ein zweites äußeres Ende umfasst,
wobei das erste äußere Ende eine Kopplungseinrichtung (21) umfasst, die geeignet ist, in das Halterloch (35) des Halters (3) einzugreifen,
**dadurch gekennzeichnet,**
**dass** das Halterloch (35) auf der Innenseite mit einer Struktur vom Schraubgewindetyp versehen ist, welche ein Schraubgewinde oder eine Struktur ist, die die Funktion eines Schraubgewindes erfüllen kann,
und **dass** die erste Kopplungseinrichtung (21) des Elements (2) eine Struktur vom Schraubgewindetyp umfasst, welche geeignet ist, mit einer Struktur vom Schraubgewindetyp in dem ersten Halterloch (35) zusammenzuwirken.

2. Bausatz nach Anspruch 1, wobei die Öffnung (11) ein Querloch ist.

3. Bausatz nach Anspruch 1 oder 2, wobei die Länge des Halters (3) im Wesentlichen gleich der Länge des Querlochs (11) ist und wobei die Abmessungen des Bausteins (1) und des Halters (3) ferner so gewählt sind, dass dann, wenn der Halter (3) in dem Querloch (11) angeordnet ist und der Halter (3) nicht von dem Baustein (1) vorsteht, die ersten (38) und zweiten (39) äußeren Enden des Halters (3) an der Stelle einer ersten (14) bzw. einer zweiten (15) Fläche des Bausteins (1) hervortreten.

4. Bausatz nach einem der Ansprüche 1 bis 3, wobei der Halter (3) ferner für eine lösbare Befestigung in der Öffnung (11) geeignet ist.

5. Bausatz nach einem der vorhergehenden Ansprüche, wobei der Halter (3) länglich ist und eine zweite Kopplungseinrichtung an seinem zweiten äußeren Ende (39) umfasst, welches ein Halterloch (35) umfasst, wobei das Halterloch (35) auf der Innenseite mit einer Struktur vom Schraubgewindetyp versehen ist, welche ein Schraubgewinde oder eine Struktur ist, die die Funktion eines Schraubgewindes erfüllen kann.

6. Bausatz nach Anspruch 5, wobei der Halter (3) ein einziges Halterloch (35) aufweist, welches das erste Halterloch und das zweite Halterloch umfasst.

7. Bausatz nach einem der vorhergehenden Ansprüche, wobei zumindest ein Halterloch (35) nahe und in Richtung seines offenen äußeren Endes (38) erweitert ist, um so in dem Halter (3) eine ringförmige Ausnehmung (32; 34) um das Halterloch (35) zu bilden.

8. Bausatz nach einem der Ansprüche 5 bis 7, wobei die beiden Halterlöcher (35) nahe und in Richtung ihres offenen äußeren Endes (38; 39) erweitert sind, um so in dem Halter ringförmige Ausnehmungen (32, 34) um die Halterlöcher (35) zu bilden.

9. Bausatz nach einem der vorhergehenden Ansprüche, wobei die Öffnung (11) nahe und in Richtung der äußeren Fläche (14; 15) des Bausteins (1) erweitert ist, um so in dem Baustein (1) eine ringförmige Ausnehmung (12) um die Öffnung (11) zu bilden.

10. Bausatz nach Anspruch 9, wobei der Halter (3) nahe und in Richtung einer seiner äußeren Enden (38, 39) erweitert ist und hier einen ringförmigen Vorsprung (31) für den Halter (3) bildet, der komplementär ist zu der in dem Baustein (1) um die Öffnung (11) gebildeten Ausnehmung (12).

11. Bausatz nach einem der vorhergehenden Ansprüche, wobei der Halter (3) in radialer Richtung elastisch verformbar ist.

12. Bausatz nach einem der vorhergehenden Ansprüche, wobei der Halter (3) ferner eine Längsöffnung durch die Halter-Seitenwand im Wesentlichen parallel zur Halter-Längsachse und über die gesamte Halterlänge sich erstreckend aufweist.

13. Bausatz nach einem der vorhergehenden Ansprüche, wobei das zweite äußere Ende (221) des Elements (2) eine zweite Kopplungseinrichtung (22) aufweist, die geeignet ist, in ein Halterloch einzugreifen, und wobei die zweite Kopplungseinrichtung (22) des Elements (2) eine Struktur vom Schraubgewindetyp umfasst, welche geeignet ist, mit einer Struktur vom Schraubgewindetyp in einem Halterloch zusammenzuwirken.

14. Bausatz nach einem der vorhergehenden Ansprüche, wobei das Element (2) eine Sperreinrichtung (23) umfasst, die geeignet ist, mittels der ersten (21) oder der zweiten (22) Kopplungseinrichtung das Einführen des Elements (2) in das Halterloch (35) auf eine bestimmte Tiefe zu begrenzen.

15. Bausatz nach einem der vorhergehenden Ansprüche, wobei die Abmessungen der Sperreinrichtung (23) so gewählt sind, dass die Sperreinrichtung (23) in einen Raum passen würde, der durch die beiden ringförmigen Ausnehmungen (32) von identischen Haltern (3) gebildet ist, welche gemeinsam in Reihe ausgerichtet und mit ihren Köpfen gegen einander platziert wären.

## Revendications

1. Ensemble de construction du type bloc constructif, comprenant au moins une brique de construction (1) qui comprend au moins une ouverture (11), au moins un élément de retenue (3) qui est adapté de manière à être agencé dans l'ouverture de la brique de construction (1), et au moins un élément (2) qui forme une saillie du type goujon pour la brique de construction, dans lequel au moins une première extrémité externe (38) de l'élément de retenue (3) comprend un premier orifice d'élément de retenue (35) qui est adapté de manière à être couplé à l'élément (2), l'élément (2) comprenant des première et seconde extrémités externes, la première extrémité externe comprenant un moyen de couplage (21) qui est adapté de manière à s'assembler dans l'orifice d'élément de retenue (35) de l'élément de retenue (3), **caractérisé en ce que** l'orifice d'élément de retenue (35) comporte, à l'intérieur, une structure du type filetage de vis, qui est un filetage de vis ou une structure qui peut remplir la fonction de filetage de vis, et **en ce que** le premier moyen de couplage (21) de l'élément (2) comprend une structure du type filetage de vis adaptée de manière à coopérer avec une structure du type filetage de vis sur le premier orifice d'élément de retenue (35).

2. Ensemble de construction selon la revendication 1, dans lequel l'ouverture (11) est un orifice transversal.

3. Ensemble de construction selon la revendication 1 ou 2, dans lequel la longueur de l'élément de retenue (3) est sensiblement égale à la longueur de l'orifice transversal (11) et dans lequel les dimensions de la brique de construction (1) et de l'élément de retenue (3) sont en outre choisies de telle sorte que, lorsque l'élément de retenue (3) est agencé dans l'orifice transversal (11) et que l'élément de retenue (3) n'est pas en saillie par rapport à la brique de construction (1), la première (38) et la seconde (39) extrémités externes de l'élément de retenue (3) débouchent respectivement à la position d'une première (14) et d'une seconde surface (15) de la brique de construction (1).

4. Ensemble de construction selon l'une quelconque des revendications 1 à 3, dans lequel l'élément de retenue (3) est en outre adapté afin d'assurer une fixation amovible dans l'ouverture (11).

5. Ensemble de construction selon l'une quelconque des revendications précédentes, dans lequel l'élément de retenue (3) est allongé et comprend un second moyen de couplage sur sa seconde extrémité externe (39), qui comprend un orifice d'élément de retenue (35), dans lequel l'orifice d'élément de retenue (35) comporte, sur l'intérieur, une structure du type filetage de vis, formant un filetage de vis ou une structure qui peut remplir la fonction de filetage de vis.

6. Ensemble de construction selon la revendication 5, dans lequel l'élément de retenue (3) comprend un simple orifice d'élément de retenue (35) comprenant le premier orifice d'élément de retenue et le second orifice d'élément de retenue.

7. Ensemble de construction selon l'une quelconque des revendications précédentes, dans lequel au moins un orifice d'élément de retenue (35) est évasé à proximité et de son extrémité externe ouverte (38) et dans la direction de celle-ci de manière à former ainsi une cavité annulaire (32 ; 34) dans l'élément de retenue (3) autour de l'orifice d'élément de retenue (35).

8. Ensemble de construction selon l'une quelconque des revendications 5 à 7, dans lequel les deux orifices d'élément de retenue (35) sont évasés à proximité de leur extrémité externe ouverte (38 ; 39) et dans la direction de celle-ci de manière à former ainsi des cavités annulaires (32, 34) dans l'élément de retenue autour des orifices d'élément de retenue (35).

9. Ensemble de construction selon l'une quelconque des revendications précédentes, dans lequel l'ouverture (11) est évasée à proximité et de la surface externe (14 ; 15) de la brique de construction (1) et dans la direction de celle-ci de manière à former ainsi une cavité annulaire (12) dans la brique de construction (1) autour de l'ouverture (11).

10. Ensemble de construction selon la revendication 9, dans lequel l'élément de retenue (3) est évasé à proximité de l'une de ses extrémités externes (38, 39) et dans la direction de celles-ci, formant ainsi une saillie annulaire (31) pour l'élément de retenue (3) qui est complémentaire à la cavité (12) formée dans la brique de construction (1) autour de l'ouverture (11).

11. Ensemble de construction selon l'une quelconque des revendications précédentes, dans lequel l'élément de retenue (3) peut être déformé de manière élastique dans la direction radiale.

12. Ensemble de construction selon l'une quelconque des revendications précédentes, dans lequel l'élément de retenue (3) comprend en outre une ouverture allongée à travers la paroi latérale de l'élément de retenue, sensiblement parallèle à l'axe longitudinal de l'élément de retenue et s'étendant sur la totalité de la longueur du support.

13. Ensemble de construction selon l'une quelconque des revendications précédentes, dans lequel la seconde extrémité externe (221) de l'élément (2) comprend un second moyen de couplage (22) qui est adapté afin de s'assembler dans un orifice d'élément de retenue et dans lequel le second moyen de couplage (22) de l'élément (2) comprend une structure du type filetage de vis adaptée de manière à coopérer avec une structure du type filetage de vis dans un orifice d'élément de retenue.

14. Ensemble de construction selon l'une quelconque des revendications précédentes, dans lequel l'élément (2) comprend un moyen de blocage (23) adapté de manière à limiter l'insertion de l'élément (2) au moyen des premier (21) et second (22) moyens de couplage dans l'orifice d'élément de retenue (35) à une profondeur déterminée.

15. Ensemble de construction selon les revendications précédentes, dans lequel les dimensions du moyen de blocage (23) sont choisies de telle sorte que le moyen de blocage (23) peut s'assembler dans un espace formé par les deux cavités annulaires (32) d'éléments de retenue (3) identiques qui peuvent être placés mutuellement en ligne, alignés avec leurs têtes l'une contre l'autre.
